# EUROPEAN PATENT APPLICATION

(11) **EP 4 776 090 A1**
(43) Date of publication of application: **15.07.2026**
(21) Application number: 25386001.9
(22) Date of filing: 14.01.2025
(51) Int. Cl.: G05D 1/223, G05D 1/698, G05D 107/70, G05D 105/28, G05D 109/10, G06Q 10/0631

(54) **HANDLING A WORK SITE**

(71) Applicant: Volvo Autonomous Solutions AB, 405 08 Göteborg (SE)
(72) Inventor: Georgiadis, Giorgos, 418 75 Göteborg (SE)
(74) Representative: Valea AB

(57) **Abstract**

A computer system (700) comprising a processing circuitry (702) configured to handle a work site (100) where a plurality of autonomous vehicles (1) operate is provided.

The processing circuitry (702) is configured to obtain work site information indicative of a current state of the work site (100). The processing circuitry (702) is configured to receive a natural language request for one or more tasks to be performed in the work site (100) by the plurality of vehicles (1). The processing circuitry (702) is configured to interpret from the natural language request, by using a machine learning model a request to perform the one or more tasks. The processing circuitry (702) is configured to, based on the interpreted request and the work site information, establish an action plan for the plurality of vehicles (1) to perform the one or more tasks.

## Description

### TECHNICAL FIELD

The disclosure relates generally to work site management. In particular aspects, the disclosure relates to handing a work site where a plurality of autonomous vehicles operate. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

Instructing autonomous vehicles to perform various tasks in a work site may be difficult as there are numerous factors to consider which may not be known to an operator.

Hence, when an operator instructs an autonomous vehicle to perform a task, said task may conflict with current operations of another autonomous vehicle, or may not be feasible to perform under some certain context or situation of the work site. This means that when the autonomous vehicle attempts to perform said task, the vehicle may encounter unexpected delays, e.g., due to having to handle unexpected hazards or issues in the work site, which may thereby reduce productivity.

Furthermore, it may be difficult and time-consuming for an operator to realize the instruction of the vehicles to perform certain tasks. This is since the operator may need to have specialized knowledge of the different vehicles, their interfaces, and may need to separately configure each vehicle how it shall operate in the work site. Hence, such instructions may be impossible for the operator, or at least may take away significant time from the operator. This means that even if the operator is able to instruct the vehicles properly, the operator will need to spend significant time for the instructions instead of performing other productive tasks in the work site.

Productivity of work sites where autonomous vehicle operate may therefore be target for improvement.

### SUMMARY

According to a first aspect of the disclosure, a computer system comprising a processing circuitry configured to handle a work site is provided. A plurality of vehicles operate in the work site. Each of the plurality of vehicles is an autonomous vehicle.

The processing circuitry is configured to obtain work site information indicative of a current state of the work site. The current state of the work site comprises respective positions and capabilities of the plurality of vehicles. The capabilities of the plurality of vehicles at least are indicative one or more operations the plurality of vehicles is capable of performing.

The processing circuitry is configured to receive a natural language request for one or more tasks to be performed in the work site by at least one vehicle of the plurality of vehicles.

The processing circuitry is configured to interpret from the natural language request, by using a machine learning model at least partly trained to handle natural language requests, a request to perform the one or more tasks.

The processing circuitry is configured to, based on the interpreted request and the work site information, establish an action plan for the plurality of vehicles to perform the one or more tasks, the action plan comprising instructions for how the plurality of vehicles shall operate to perform the one or more tasks. The action plan may typically be established by, using or at least being assisted by, the machine learning model which interprets the request to perform the one or more tasks.

The processing circuitry is configured to transmit the action plan to the plurality of vehicles.

The first aspect of the disclosure may seek to improve productivity of the work site.

A technical benefit may include improved productivity of the work site. This is since the natural language request can efficiently, such as from input from an operator, indicate and be automatically interpreted which one or more tasks are requested to be performed, thereby relieving any operator from having to manually configure each vehicle. The operator can thereby focus on other productive tasks.

Furthermore, since the action plan is established based on the work site information, the action plan to be performed by the plurality of vehicles can consider the current state of the work site and the respective positions and capabilities of the plurality of vehicles. This means that the action plan can be ensured to be established such that it is considered how the plurality of vehicles can efficiently perform the action plan with respect to the work site information.

This means that there will be fewer delays in operations since any unexpected hazards or delays caused by not considering the current state of the work site is kept to a minimum or completely avoided.

Optionally in some examples, including in at least one preferred example, the work site information comprises data as obtained from the plurality of vehicles and/or by one or more sensors arranged in the work site.

A technical benefit may include improved productivity of the work site. This is since the work site information can be measured directly by the plurality of vehicles and/or by sensors in the work site, thereby providing accurate information of the current state of the work site. Accordingly, the action plan can be more precisely established to account for the current state of the work site, and thereby productivity is increased.

Optionally in some examples, including in at least one preferred example, obtaining the work site information comprises obtaining the work site information periodically or continuously.

A technical benefit may include improved productivity of the work site. As the information is periodically or continuously obtained, the work site information will provide more accurate information of the current state of the work site. Accordingly, the action plan can be more precisely established to account for the current state of the work site, and thereby productivity is increased..

Optionally in some examples, including in at least one preferred example, the work site information comprises real-time data and/or wherein obtaining the work site information is subject to a time constraint.

A technical benefit may include improved productivity of the work site. This is since the work site information will provide more accurate information of the current state of the work site. Accordingly, the action plan can be more precisely established to account for the current state of the work site, and thereby productivity is increased.

Optionally in some examples, including in at least one preferred example, the work site information comprises any one or more out of:
- spatial information of the work site,
- fueling or charging stations of the work site,
- maintenance facilities of the work site,
- geofences of the work site,
- areas of the work site with restricted access,
- areas of the work site requiring adapted operations,
- one or more assigned tasks of the plurality of vehicles,
- one or more positions of actors and/or obstacles in the work site,
- environmental information of the work site,
- hardware and/or software capabilities of respective vehicles in the plurality of vehicles,
- vehicle type of respective vehicles in the plurality of vehicles,
- status of infrastructure within the work site,
- current routes and/or priorities associated with one or more tasks assigned to the plurality of vehicles,
- availability of resources within the work site, and
- traffic information of the work site.

A technical benefit may include improved productivity of the work site. This is since examples herein can utilize and consider any suitable information of the work site. More information may typically increase precision in how well the action plan can be established to consider all current state in the work site. Hence, any further information may independently or in combination increase productivity in the work site.

In particular, productivity may be specifically improved when the work site information comprises current routes and/or priorities associated with one or more tasks assigned to the plurality of vehicles. This is since it may be useful to have information of which routes the plurality of vehicles were going to take, such that the action plan can be established to adjust from a vehicle performing one task to another, and which priorities the different tasks have such that it is possible to determine whether or not they may be further established as part of the action plan, e.g., low priority tasks may sometimes be able to remain as low priority tasks. For example, tasks such as charging and/or maintenance may be optional and may be disregarded under certain situations, e.g., when maintenance is scheduled but the vehicle is operating efficiently. Tasks such as routine inspections, cleaning, and/or other upkeep activities may also be skipped or deferred whenever needed to meet other requirements.

Optionally in some examples, including in at least one preferred example, the processing circuitry is configured to validate the action plan, and to transmit the action plan in response to the action plan being successfully validated.

A technical benefit may include improved productivity of the work site. This is since it can be ensured by the validation that the action plan can be performed.

Optionally in some examples, including in at least one preferred example, the processing circuitry is configured to validate the action plan by:
- transmitting the action plan to a validating entity for validation of the action plan,
- receiving a response from the validating entity indicating whether the action plan is validated or that an adjustment is required.

A technical benefit may include improved productivity of the work site. This is since the validating entity can either validate the action plan, or indicate that adjustments are needed since some aspect(s) of the action plan may not be feasible.

Optionally in some examples, including in at least one preferred example, the processing circuitry is configured to validate the action plan by, when receiving a response indicating that an adjustment is required to the action plan, determining the adjustment to the action plan. In these examples, the adjustment is determined based on information supplied in the received response, and/or by using the machine learning model to re-establish the action plan,
- transmitting the adjustment to the validating entity, and
- receiving a response from the validating entity indicating whether or not the adjustment is approved.

A technical benefit may include improved productivity of the work site. This is since the adjustment to the action plan may be efficiently determined and approved by the validating entity. This in effect creates a feedback loop where the validating entity may reject, approve, and possibly propose adjustments which leads to an improvement in the action plan and ultimately, productivity in the work site.

Optionally in some examples, including in at least one preferred example, the processing circuitry is configured to validate the action plan by simulating the action plan and assessing by the simulation whether or not the action plan fulfills one or more operational constraints of the work site. In some of these examples, validating the action plan comprises at least one of:
determining whether the one or more operational constraints of the work site can be fulfilled, and
transmitting an adjustment to the action plan, which adjustment is determined to account for at least one of the one or more operational constraints of the work site.

A technical benefit may include improved productivity of the work site. This is since the simulation may accurately assess whether or not the one or more operational constraints can be fulfilled such as by simulating the entire work site given the work site information.

Optionally in some examples, including in at least one preferred example, the processing circuitry is configured to determine one or more operational constraints for the plurality of vehicles to operate in the work site, the one or more operational constraints being accounted for when establishing and/or validating the action plan.

A technical benefit may include improved productivity of the work site. This is since the one or more operational constraints can be determined for establishing or validating the action plan. One example is that simulation may be able to determine the one or more operational constraints, e.g., by the simulation discovering hazardous situations or situations where a vehicle is at risk of being out of fuel/energy, or will have a chance of components wearing out, causing excessive wear to the work site, potential traffic situations, etc. Due to these situations, the one or more operational constraints may be determined as constraints for how the plurality of vehicles at least partly avoids such situations.

Optionally in some examples, including in at least one preferred example, the one or more operational constraints relate to any one or more out of:
- a number of available charging or fueling stations and fuel or energy status of the plurality of vehicles,
- a number of available maintenance facilities and a maintenance need of the plurality of vehicles,
- available equipment for the plurality of vehicles to use and a respective need for the equipment,
- whether the plurality of vehicles is allowed to operate, or can operate, with respect to wear of roads or drivable surfaces in the work site,
- whether the plurality of vehicles is allowed to operate, or can operate, with respect to a status of infrastructure in the work site,
- whether the plurality of vehicles is allowed to operate, or can operate, with respect to one or more geographical constraints in the work site.

A technical benefit may include improved productivity of the work site. This is since a wide range of productivity issues may be avoided or mitigated when considering the above-mentioned operational constraints.

In any of the examples herein, it may be noted that the vehicles of the plurality of vehicles may not need to be of the same type or even of the same generation and/or version. The capabilities of the plurality of vehicles may be dependent on the type, generation, and/or version of the different vehicles and may be used for determining what tasks each vehicle can perform and/or how they can and/or is allowed to operate within the work site.

In any of the examples herein the capabilities of the plurality of vehicles may be based on any software and/or hardware capabilities of any one or more of the plurality of vehicles, e.g., which may be linked to the respective vehicle type, generation, and/or version.

Optionally in some examples, including in at least one preferred example, the natural language request is received as input by a voice command.

A technical benefit may include improved productivity of the work site. This is since an operator may simply speak in natural (human) language, the one or more tasks and their preferable options or conditions which may be interpreted and established as an action plan, without the operator having to have expertise in programming each individual vehicle. Furthermore, significant time is saved since the operator does not need to program each individual vehicle. While voice input is the preferred method of input of the natural language request, other input may also apply, e.g., by text or sign language.

Optionally in some examples, including in at least one preferred example, the machine learning model is, or comprises, a Large Language Model (LLM). This means that the machine learning model is trained to be able to interpret any complex, abstract, or concrete natural language request, and may further, by interpreting the natural language request, transform such request into the establishment of the action plan which can be executed by the plurality of vehicles. A further benefit may be that an LLM may be able to understand and interpret any language into the establishment of the action plan, thereby the plurality of vehicles can easily be managed by any suitable operator, independent of that operators language skills.

According to a second aspect of the disclosure, a vehicle comprising and/or being controlled by the computer system according to the first aspect is provided.

Optionally in some examples, including in at least one preferred example, the vehicle is an autonomous vehicle.

According to a third aspect of the disclosure, a computer-implemented method for handling a work site where a plurality of vehicles operate is provided. Each of the plurality of vehicles is an autonomous vehicle.

The method comprises, by a processing circuitry of a computer system, obtaining work site information indicative of a current state of the work site. The current state of the work site comprises respective positions and capabilities of the plurality of vehicles. The capabilities of the plurality of vehicles are at least indicative one or more operations the plurality of vehicles is capable of performing.

The method comprises, by the processing circuitry, receiving a natural language request for one or more tasks to be performed in the work site by at least one vehicle of the plurality of vehicles.

The method comprises, interpreting from the natural language request, by using a machine learning model at least partly trained to handle natural language requests, a request to perform the one or more tasks.

The method comprises, based on the interpreted request and the work site information, establishing an action plan for the plurality of vehicles to perform the one or more tasks. The action plan comprises instructions for how the plurality of vehicles shall operate to perform the one or more tasks.

The method comprises, transmitting the action plan to the plurality of vehicles.

Optionally in some examples, including in at least one preferred example, the method comprises, by the processing circuitry, determining one or more operational constraints for the plurality of vehicles to operate in the work site, the one or more operational constraints being accounted for when establishing and/or validating the action plan.

Optionally in some examples, including in at least one preferred example, the method comprises, by the processing circuitry, validating the action plan. In some of these examples, transmitting the action plan is performed in response to the action plan being successfully validated.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

### BRIEF DESCRIPTION OF THE DRAWINGS

Examples are described in more detail below with reference to the appended drawings.
**FIG. 1** is an exemplary work site according to an example.
**FIG. 2** is a flow chart of an exemplary method according to an example.
**FIG. 3** illustrates an example scenario.
**FIG. 4** illustrates a sequence diagram of examples herein.
**FIG. 5** is another view of **FIG. 1****,** according to an example.
**FIG. 6** is a flow chart of an exemplary method according to an example.
**FIG. 7** is a schematic diagram of an exemplary computer system for implementing examples disclosed herein, according to an example.

### DETAILED DESCRIPTION

The detailed description set forth below provides information and examples of the disclosed technology with sufficient detail to enable those skilled in the art to practice the disclosure.

As part of developing examples herein, it has been identified that control of autonomous vehicles within a work site are often rigid and do not allow for easy changes to the vehicles' routes or tasks. There is also a lack of intuitive interfaces for non-specialized operators to interact with the system. Examples herein may alleviate at least some of these issues.

Examples herein may use an Artificial Intelligence (AI) agent to overcome some of the mentioned issues to provide improvements in productivity in a work site. AI agent as used herein may mean any actions performed with reference to software and/or processing circuitry which at least partly operates by utilizing a machine learning model such as an LLM. In examples herein, the AI agent may serve as an interface for a work site operator, allowing the operator to control autonomous vehicles using natural language requests, e.g., a command may comprise "re-route two trucks to the loading station for collecting newly delivered materials" or "continue previous operations but avoid area X", or "replace all routes to wheel loaders with routes to the specific wheel loader Y". In examples herein, the AI agent may have access to any suitable information of the work site such as tools, software functions of a transport mission and control systems, and/or real-time information about the work site and the elements of the autonomous transport system. The access may for example allow the AI agent to have a comprehensive understanding of the current state of the work site, available resources of the work site, and capabilities of the vehicles. Using this knowledge, the AI agent can interpret an operator's requests, formulate an action plan to fulfill them, and potentially validate this plan using a validating entity, e.g., the operator or a special validator software, and to transmit the action plan to the vehicles for execution.

Examples herein may greatly improve upon existing solutions by providing a more flexible and intuitive control system for autonomous vehicles operating in work sites. Examples herein may allow for quick changes to vehicle routes or tasks based on operator requests, and does not require specialized knowledge to operate.

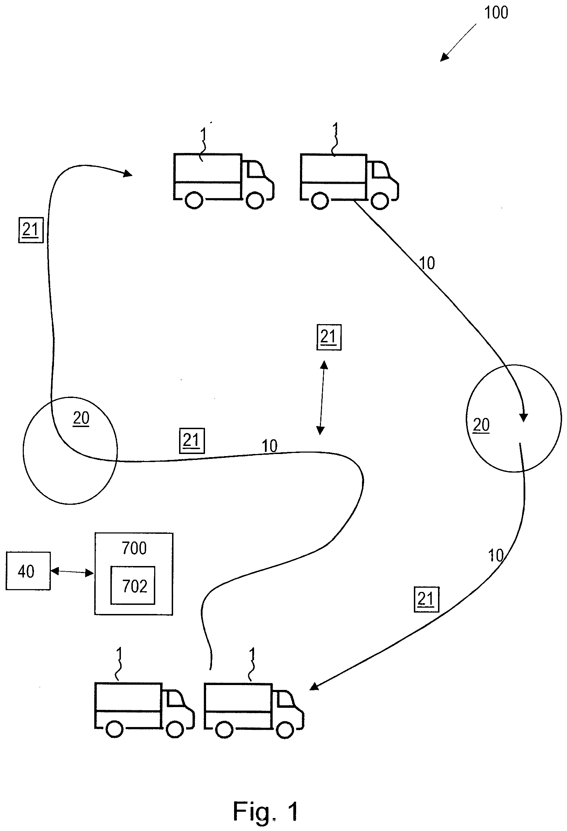

**FIG. 1** illustrates an exemplary work site 100 according to an example.

The work site 100 may be any suitable work site, e.g., a quarry, underground environment, warehouse, etc. The work site 100 may be a confined area. In the work site 100, manual actors may or may not be present, i.e., the work site 100 may be fully automated or partly automated.

In the work site 100, a plurality of vehicle 1 operate. Each of the plurality of vehicles are autonomous, i.e., they may be configured to control at least part of their operations without explicit human input to interfaces of the respective vehicle. The plurality of vehicles 1 may or may not transport users.

While the examples herein may describe the plurality of vehicles 1 in general and may illustrate them as one type of vehicle, the plurality of vehicles 1 may comprises any suitable combination of different and multiple vehicle types, e.g., trucks with a trailer or without, different models of trucks, etc., as well as multiple configurations of the same vehicle type, e.g. different generations/versions of software and/or hardware for the same vehicle type, etc.

As illustrated in FIG. 1. the work site 100 may be complex, and may comprise or relate to any suitable entities. For example, the plurality of vehicles 1 may be assigned one or more tasks which may comprise the respective vehicles to follow **one or more routes 10.**

The work site 100 may comprise a number of different **areas 20,** e.g., areas with restricted access of the work site 100 such that a vehicle may need to have such access rights, or areas requiring adapted operations. The adapted operations may be that a respective vehicle of the plurality of vehicles 1 may have to drive below a speed limit at certain locations, such as due to terrain difficulty or due to presence of a manual actor.

The work site 100 may comprise a one or more resources 21. Resources as used herein may mean any suitable entity of the work site which may be needed or may increase chances of the plurality of vehicles 1 to fulfill a requested task. In particular, the one or more of resources 21 may comprise fueling stations, charging stations, loading/dumping sites, or maintenance facilities of the work site 100. Any other suitable resources may also apply.

In some examples herein when resources such as the one or more resources 21 are discussed, the resources may further comprise any material and/or immaterial resources.

Examples of resources as material resources may include at least one of: cleaning areas, calibration areas, inspection stations, and storage facilities.

Examples of immaterial resources may include communication infrastructure, for example network connectivity, and priority routing paths.

Examples herein may be performed by a **computer system 700** and/or a **processing circuitry 702** therein.

The computer system 700 and/or the processing circuitry 702 therein may be comprised in at least one vehicle of the plurality of vehicles 1, e.g., a lead vehicle, or may be comprised in a remote location such as part of one or more servers or cloud services.

The computer system 700 and/or a processing circuitry 702 therein may also be distributed over multiple locations.

The computer system 700 and/or a processing circuitry 702 therein may comprise a machine learning model, where the machine learning model may be an LLM. The computer system 700 and/or a processing circuitry 702 therein may use an AI agent which comprises or uses said LLM to perform all or at least part of examples herein.

The computer system 700 and/or a processing circuitry 702 therein may be configured to obtain work site information indicative of a current state of the work site 100 by using sensors in the work site 100 and/or on the plurality of vehicles 1. The computer system 700 and/or a processing circuitry 702 therein may be configured to obtain a natural language request by receiving a voice command from an operator which indicates a request for one or more tasks for the plurality of vehicles 1 to perform in the work site 100. The computer system 700 and/or a processing circuitry 702 therein may use the machine learning model to interpret the request and to establish an action plan for transmission to the plurality of vehicles 1.

In some examples herein, a **validating entity 40** may be used for validating the action plan. The action plan may be transmitted from the computer system 700 and/or the processing circuitry 702 therein prior to transmitting the action plan to the plurality of vehicles 1.

The validating entity 40 may be an operator of the work site 100, or a validating software, e.g., remote to or part of the computer system 700, or a combination thereof.

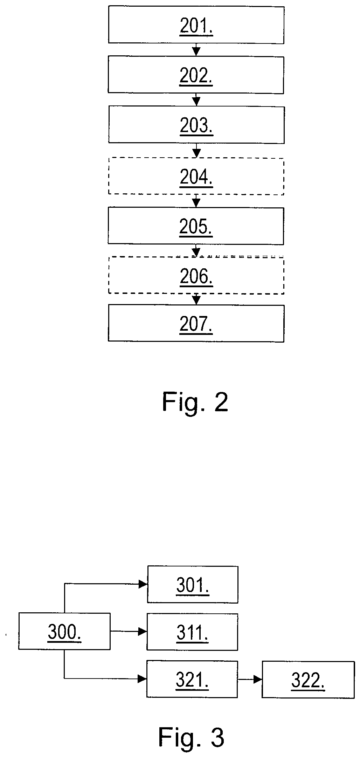

**FIG. 2** illustrates a flow chart of an exemplary computer-implemented method for handling the work site 100 according to examples herein. The plurality of vehicles 1 operate in the work site 100. Each of the plurality of vehicles 1 is an autonomous vehicle. The method may be performed by the computer system 700 and/or the processing circuitry 702 therein. The method comprises the following actions which can be taken in any suitable order, and in some examples, be iterated. Dashed boxes in FIG. 2 may indicate optional actions. According to some examples, any of the following actions may be performed at least partly by an AI agent of the computer system 700 and/or the processing circuitry 702.

### Action 201

The method comprises obtaining work site information indicative of a current state of the work site 100. The current state of the work site 100 comprises respective positions and capabilities of the plurality of vehicles 1. The capabilities of the plurality of vehicles 1 at least being indicative one or more operations the plurality of vehicles 1 is capable of performing.

Besides whether a vehicle is capable of performing one or more operations, capabilities of individual vehicles as part of the capabilities of the plurality of vehicles 1 may indicate performance, capabilities, or limits for specific operations. For example, a maximum speed that a respective vehicle of the plurality of vehicles 1 can achieve may be dependent on software and/or hardware that it possesses.

The capabilities of the plurality of vehicles 1 may further comprise any suitable hardware and/or software capabilities of each respective vehicle of the plurality of vehicles 1, e.g., what operations or limits are possible by hardware, e.g., processing power, memory constraints, vehicle components, actuator capabilities, and/or what software functions are programmed to the vehicle or possible to install with the vehicle system.

The work site information may be obtained in any suitable manner, measured, derived, and/or estimated. In some examples, the work site information comprises data as obtained from the plurality of vehicles 1 and/or by one or more sensors arranged in the work site 100.

In some examples, obtaining the work site information comprises obtaining the work site information periodically or continuously.

In some examples, the work site information comprises real-time data and/or wherein obtaining the work site information is subject to a time constraint.

In other words, the work site information may always comprise up to date or latest information available of the work site 100.

In examples herein, it may be beneficial to have as much information as possible of the work site 100 such that it is possible to ensure that an action plan can be established to be as accurate as possible for the plurality of vehicles 1.

The work site information comprises any one or more out of:
- spatial information of the work site 100, e.g., a map or other positional information or outline of the work site 100,
- fueling or charging stations of the work site 100, e.g., their location, type, and/or availability,
- maintenance facilities of the work site, e.g., their location, type, and/or availability,
- geofences of the work site, e.g., where are the plurality of vehicles 1 allowed to travel within the work site 100,
- areas of the work site with restricted access, e.g., which vehicles or vehicle types of the plurality of vehicles 1 are allowed in what areas,
- areas of the work site requiring adapted operations, e.g., speed limited areas, areas with manual actors, areas with hazardous terrain or traffic, etc.,
- one or more assigned tasks of the plurality of vehicles 1, e.g., what current tasks are being carried out,
- one or more positions of actors and/or obstacles in the work site 100, i.e., where are obstacles or manual actors that may cause a hazardous situation if not considered in an action plan,
- environmental information of the work site 100, e.g., temperature and/or surface conditions,
- capabilities of respective vehicles in the plurality of vehicles, e.g., what operations can the respective vehicle perform and/or what components it is equipped with, software capabilities, and/or hardware capabilities,
- vehicle type of respective vehicles in the plurality of vehicles 1, e.g., wheel loader, truck, transport unit, self-driving trailer, tractor, etc.,
- status of infrastructure within the work site 100, e.g., with respect to degradation and/or online status of infrastructure,
- wear of drivable surfaces within the work site 100, e.g., potholes and/or if terrain difficulty may indicate if certain vehicles can operate in areas efficiently,
- current routes and/or priorities associated with one or more tasks assigned to the plurality of vehicles 1,
- availability of resources 21 within the work site 100, and
- traffic information of the work site 100.

In some examples, it may be particularly beneficial that the work site information comprises current routes and/or priorities associated with one or more tasks assigned to the plurality of vehicles. This is since it may be useful to have information of which routes the plurality of vehicles were going to take, such that the action plan can be established to adjust from a vehicle performing one task to another, and which priorities the different tasks have such that it is possible to determine whether or not they may be further established as part of the action plan, e.g., low priority tasks may sometimes be able to remain as low priority tasks.

To obtain some work site information, the work site 100 may be simulated such as to determine certain aspects of the work site 100 such as for obtaining information of areas which are hazardous.

In any of the examples herein, it may be noted that the vehicles of the plurality of vehicles 1 may not need to be of the same type or even of the same generation and/or version.

In some examples, the capabilities of the plurality of vehicles 1, e.g., as part of the work site information, may be dependent on the type, generation, and/or version of the different vehicles of the plurality of vehicle 1, and may be used for determining what tasks each respective vehicle can perform and/or how they can and/or is allowed to operate within the work site.

In any of the examples herein the capabilities of the plurality of vehicles 1 may be based on any software and/or hardware capabilities of any one or more of the plurality of vehicles 1, e.g., which may be linked to the respective vehicle type, generation, and/or version.

In some examples, obtaining the work site information may comprise obtaining, e.g., as predefined or stored, and/or determining the capabilities of the plurality of vehicles 1 in any suitable manner.

As an example, obtaining or determining the capabilities of the plurality of vehicles 1 may comprises evaluating software and/or hardware capabilities of each vehicle of the plurality of vehicles 1 to determine one or more tasks and/or types of tasks they can perform and the conditions under which they can be performed. Such determination may include assessing for each vehicle, one or more systems and/or components for the respective vehicle, e.g., navigation system, sensors, and processing power, as well as any specialized equipment they may be equipped with. By understanding these software and/or hardware capabilities, examples herein may comprise assigning tasks that align with each vehicle's strengths and limitations, ensuring efficient and effective operations.

**Action 202**

The method comprises receiving a natural language request for one or more tasks to be performed in the work site 100 by at least one vehicle of the plurality of vehicles 1.

The natural language request may be received as input by a voice command. While voice command may be the option primarily considered by examples herein, other natural language use may also apply such as text or sign language to indicate the request for the one or more tasks.

The one or more tasks may relate to initiating new tasks, or adapting currently assigned tasks, of the plurality of vehicles 1.

### Action 203

The method comprises interpreting from the natural language request, by using a machine learning model, a request to perform the one or more tasks. The machine learning model may be any machine learning model as discussed above. The machine learning model is at least partly trained to handle natural language requests.

As discussed above, the machine learning model may be, or may comprise, an LLM and may be able to understand or interpret any suitable language..

### Action 204

In some examples, the method may comprise determining one or more operational constraints for the plurality of vehicles 1 to operate in the work site 100. Additionally or alternatively, at least part of the one or more operational constraints may be predefined.

The one or more operational constraints may relate to any one or more out of:
- a number of available charging or fueling station and fuel or energy status of the plurality of vehicles 1,
- a number of available maintenance facilities and a maintenance need of the plurality of vehicles 1,
- available equipment for the plurality of vehicles 1 to use and a respective need for the equipment,
- whether the plurality of vehicles 1 is allowed to operate, or can operate, with respect to wear of roads or drivable surfaces in the work site,
- whether the plurality of vehicles 1 is allowed to operate, or can operate, with respect to a status of infrastructure in the work site 100,
- whether the plurality of vehicles 1 is allowed to operate, or can operate, with respect to one or more geographical constraints in the work site 100.

In some examples, one or more operational constraints may relate to constraints for any material and/or immaterial resource of any one or more of the plurality of vehicles 1, e.g., at least one of: network capacity, network availability, memory resources, processing power.

While the above-mentioned constraints area a few selected options of constrains, more abstract or more concrete constraints may also be applicable as part of examples herein.

Determining the one or more operational constraints may comprise simulating the work site 100 to detect hazardous areas or situations that may occur in the work site 100 and/or for the plurality of vehicles 1, and correspondingly, the one or more operational constraints can be determined by accounting for the detected hazardous areas or situations. Similarly, simulating the work site 100 may detect how the plurality of vehicle 1 may operate over the work site 100 with respect to available resources 21. Accordingly, the one or more operational constraints may be determined to account for that the vehicles shall be able to operate with respect to the availability of the resources 21, e.g., a vehicle may only travel a certain type of route or perform a certain type(s) of operation(s) if certain type(s) of resources are available or if the respective vehicle has sufficient amount of energy or fuel, etc. In other words, the simulation may find any suitable constraints for the plurality of vehicles 1 to operate efficiently in the work site 100.

### Action 205

The method comprises, based on the interpreted request and the work site information, establishing an action plan for the plurality of vehicles 1 to perform the one or more tasks. The action plan comprises instructions for how the plurality of vehicles 1 shall operate to perform the one or more tasks.

The action plan may be established based on the machine learning model generating the action plan for the plurality of vehicles 1.

The action plan may account for every vehicle in the plurality of vehicles 1.

The action plan may be established with separate instructions for how each vehicle in the plurality of vehicles 1 shall operate to perform the one or more tasks.

The one or more operational constraints may be accounted for when establishing the action plan.

The software and/or hardware capabilities, e.g., as obtained or determined in action 201, of one or more vehicles such as each vehicle of the plurality of vehicles 1 may be accounted for when establishing the action plan.

### Action 206

In some examples, the method may comprises validating the action plan.

In some examples, validating the action plan comprises transmitting the action plan to the validating entity 40 for validation of the action plan. The method may further comprises receiving a response from the validating entity 40 indicating whether the action plan is validated or that an adjustment is required. The response may indicate what may need to be adjusted, a suggestion for adjustments, or merely that there is a need to adjust since the action plan is not presently valid.

In some examples, validating the action plan comprises, when receiving a response indicating that an adjustment is required to the action plan, determining the adjustment to the action plan. The adjustment may be determined based on information supplied in the received response, and/or by using the machine learning model to determine the adjustment. For example, action 205 may be re-iterated, e.g., by asking the LLM of the machine learning model to re-establish the action plan as it was not validated. If the response indicates a reason for the action plan not being validated, then such information may also be provided to the machine learning model.

The adjustment may be determined in isolation or as part of a new action plan.

The adjustment may in some examples be transmitted to the validating entity 40. The method may further comprise receiving a response from the validating entity 40 indicating whether or not the adjustment is approved.

The validating entity 40 may validate the adjustment and/or action plan based on at least one of:
- simulation of the work site 100 and the action plan,
- determining whether the one or more operational constraints of the work site 100 can be fulfilled,
- predefined heuristics, and
- an operator input.

In some examples, validating the action plan comprises, simulating the work site 100 and/or the action plan. Examples may include assessing, by the simulation, whether or not the action plan fulfills the one or more operational constraints of the work site 100.

In some examples, validating the action plan comprises transmitting an adjustment to the action plan. In these examples, adjustment may be determined to account for at least one of the one or more operational constraints of the work site 100.

In some examples, when the action plan only comprises adjustments to a previous action plan, validating the action plan may comprise validating only the adjustments to the previous action plan or determining which aspects of the action plan is affected by the adjustments to the previous action plan, and validating only said affected aspects. For example, if establishing the action plan comprises adjusting one or more routes, then only those routes may need to be validated.

The machine learning model may further be trained based on the validation.

Regardless of how the machine learning model is trained, it may be useful to periodically, occasionally, or based on any suitable event, retrain the machine learning model based on action plans that were validated successfully.

### Action 207

The method comprises transmitting the action plan to the plurality of vehicles 1.

In some examples, the action plan is transmitted in response to the action plan being successfully validated. If the action plan is not validated, it may not be transmitted. Instead, the method and/or any of actions 205-206 may be iterated until an action plan is established that is further successfully validated.

Transmitting the action plan to the plurality of vehicles 1 may comprises transmitting for each vehicle, the entire action plan, or only the instructions relevant for the respective vehicle.

**FIG. 3** illustrates an example scenario.

As discussed above, the examples herein may be performed fully or at least partly by an **AI agent 300,** e.g., with use of the machine learning model which may be or comprise an LLM. The AI agent 300 may be integrated into a central control system of the work site 100. The central control system may be responsible and/or capable of controlling and/or instructing the plurality of vehicles 1, e.g. by transmitting the action plan.

The AI agent 300 may have access to any suitable code and/or functions of a virtual driver of the plurality of vehicles 1.

In this scenario, the AI agent 300 obtains **transport and/or control information 301** of the plurality of vehicles 1, e.g., indicative of a transport mission and/or control functions of the plurality of vehicles 1, e.g., as part of obtaining the work information of action 201.

The AI agent may further have knowledge about the work site 100 and any suitable information regarding the plurality of vehicles 1.

In this scenario, the AI agent 300 obtains **real-time information 311** of the plurality of vehicles 1 and/or the work site 100, e.g., as part of obtaining the work information of action 201.

When an operator of the work site 100 provides a command to the AI agent 300, the AI agent 300 may process this command using its LLM. The AI agent 300 **formulates 321** an action plan to fulfill the command, e.g., as part of action 205. In this scenario, the AI agent **validates 322** the action plan, e.g., by using a validator software of the validating entity 40, and further transmits the action plan to the plurality of vehicles 1 for execution.

As a concrete example, the operator of the work site 100 may command the AI agent 300 to redirect all trucks of the plurality of vehicles 1 to a specific wheel loader. In such a scenario, the AI agent 300 may be configured to analyze current routes of the trucks, and replace the routes that involve visiting the other wheel loaders with routes to the specified wheel loader, validate these new routes, and transmit them to the trucks.

Below follows a list of examples which may apply to the AI agent 300 above, but are not limited to the use of the AI agent 300.

### Accessing real-time data from sensors and/or monitoring systems

In some examples, obtaining the work site information may comprise accessing real-time data from sensors and/or monitoring systems of the work site 100.

The AI agent 300 may be arranged to be integrated with one or more monitoring systems and/or one or more vehicle sensors to access real-time data, e.g., as part of action 201. The real-time data may be data which has some time constraint and/or is latest available data from a monitor or sensor. The real-time data may be, or may be part of the work site information. The real-time data may include vehicle positions reported through network messages, e.g., from vehicles or monitor systems. The real-time data may include weather information from external services.

The AI agent 300 may be configured to process the real-time data to maintain an up-to-date representation of the work site 100, e.g., including locations of the plurality of vehicles 100, obstacles, and optional environmental conditions.

### Performing a Safety Check

In some examples herein, the action plan may be subject to a safety check, e.g., as part of the validation of action 206. In other words, validating the action plan may comprise checking that the action plan fulfils a safety condition.

The AI agent 300 may be configured to, e.g., as part of action 206, evaluate the safety of the action plan using one or more risk assessment algorithms, e.g., which may consider factors such as vehicle speed, proximity to obstacles, and personnel presence in the work site 100.

The AI agent 300 may be configured to execute simulations to predict potential hazards and/or operational issues, thereby ensuring the action plan is safe even in the absence of real-time data.

### Conducting a Feasibility Analysis

In some examples herein, the action plan may be subject to a feasibility analysis, e.g., as part of and/or in response to establishing the action plan of action 205.

The AI agent 300 may be configured to obtain or otherwise determine an availability of necessary resources, such as fuel, charging stations, and maintenance facilities, to ensure the action plan can be executed.

The AI agent 300 may be configured to evaluate the action plan against site operational constraints, such as working hours and infrastructure status.

### Generating a Validation Report

Examples herein, may comprise generating a validation report, e.g., indicative of the validation of action 206 and/or general feedback of the action plan to the validating entity 40 such as the operator of the work site 100.

The AI agent may generate an interactive validation report, e.g., which may indicate safety and feasibility assessments of the action plan. The interactive validation report may be presented via an interface to the validating entity 40 such as the operator of the work site 100 which may be able to view, approve and/or suggest adjustments to the action plan in real-time. A feedback loop may be initiated, e.g., where the validating entity 40 such as the operator may be able to adjust the action plan merely by providing commands to the AI agent 300 on how the action plan should be adjusted, or merely that it needs to be adjusted.

The AI agent 300 may provide recommendations for adjustments to the action plan. The recommendations may be provided with real-time constraints. The recommendations may be suggested adjustments to the action plan. The validating entity 40 such as the operator of the work site 100 may approve the recommendations within the system, or request further adjustments.

As example scenario an operator of the work site 100 may instruct the AI agent 300 to move an autonomous vehicle of the work site 100 which may be a quarry. The following Example Steps 1-7 may then be performed.

**Step 1.** Receiving Instructions: The operator may command, "Move vehicle 3 from the loading area to the crusher.".

**Step 2.** Formulating Action Plan: The AI agent 300 may translates the command into an action plan, considering current conditions of the work site 100.

**Step 3.** Accessing Real-Time Data: The AI agent 300 may access data from the monitoring systems and vehicle sensors.

**Step 4.** Performing Safety Check: The AI agent 300 may simulate one or more routes of the action plan to ensure it is clear of obstacles and personnel.

**Step 5.** Conducting Feasibility Analysis: The AI agent 300 may determine that fuel levels of the plurality of vehicles 1 is sufficient and/or may determine that a crusher needed for the action plan is available to the plurality of vehicles 1.

**Step 6.** Generating Validation Report: The AI agent 300 may compile an interactive report detailing safety and/or feasibility. The interactive report may indicate a suggested detour to avoid a detected obstacle. The operator of the work site 100 may approve these suggestions in real-time.

**Step 7.** Transmitting Action Plan: The validated action plan may be transmitted to the plurality of vehicles 1 for execution.

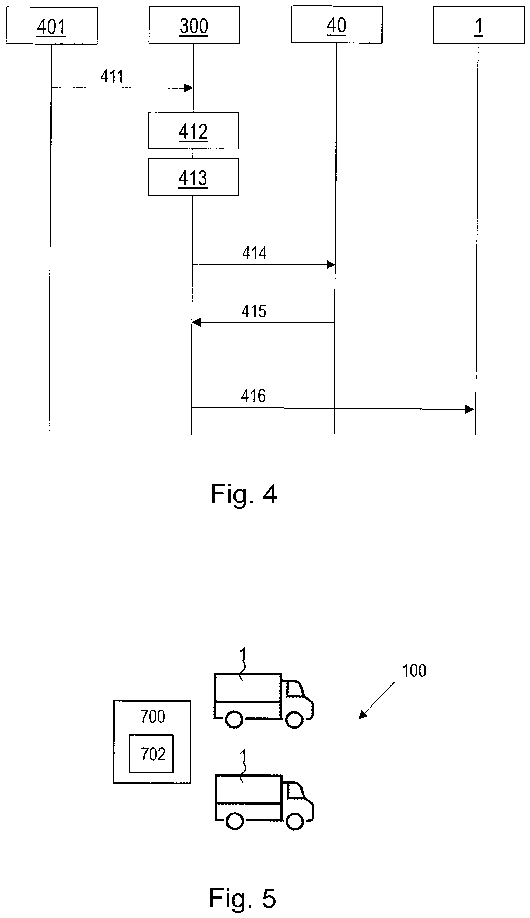

**FIG. 4** illustrates a sequence diagram according to illustrate some examples herein.

A **user 401,** e.g., an operator of the work site 100 may **speak 411** a voice command to redirect all trucks of the work site 100 to a specified location. The trucks may be all of the plurality of vehicles 1 or a sub-set of the plurality of vehicles 1.

The voice command may be interpreted by the AI agent 300, e.g., as part of action 202.

The AI agent 300 may **analyze 412** current routes of the plurality of vehicles 1, e.g., as part of action 205.

The AI agent 300 may **establish 413** an action plan, e.g., as in action 205, which replaces the routes of the trucks of the work site 100 to routes to the specified location.

The AI agent 300 may **validate 414,** e.g., as part of action 206, the action plan by transmitting the action plan or changes to the previous action plan, e.g., the replaced routes, to the validating entity 40.

The AI agent 300 may **receive 415** an acknowledgement from the validating entity 40, e.g., as part of action 206, indicating that the action plan is validated by the validating entity 40. In some scenarios, this may relate to an operator of the work site 100 approving the action plan.

The AI agent 300 may **transmit 416** the action plan to the plurality of vehicles 1, e.g., as in action 207.

**FIG. 5** is another view of **FIG. 1****,** according to an example, a computer system 700 comprising processing circuitry 702 configured to handle a work site 100 where a plurality of vehicles 1 operate is provided. Each of the plurality of vehicles 1 is an autonomous vehicle. The processing circuitry 702 is configured to obtain work site information indicative of a current state of the work site 100, the current state of the work site 100 comprising respective positions and capabilities of the plurality of vehicles 1. The capabilities of the plurality of vehicles 1 are at least indicative of one or more operations the plurality of vehicles 1 is capable of performing. The processing circuitry 702 is configured to receive a natural language request for one or more tasks to be performed in the work site 100 by at least one vehicle of the plurality of vehicles 1. The processing circuitry 702 is configured to interpret from the natural language request, by using a machine learning model at least partly trained to handle natural language requests, a request to perform the one or more tasks. The processing circuitry 702 is configured to, based on the interpreted request and the work site information, establish an action plan for the plurality of vehicles 1 to perform the one or more tasks. The action plan comprises instructions for how the plurality of vehicles 1 shall operate to perform the one or more tasks. The processing circuitry 702 is configured to transmit the action plan to the plurality of vehicles 1.

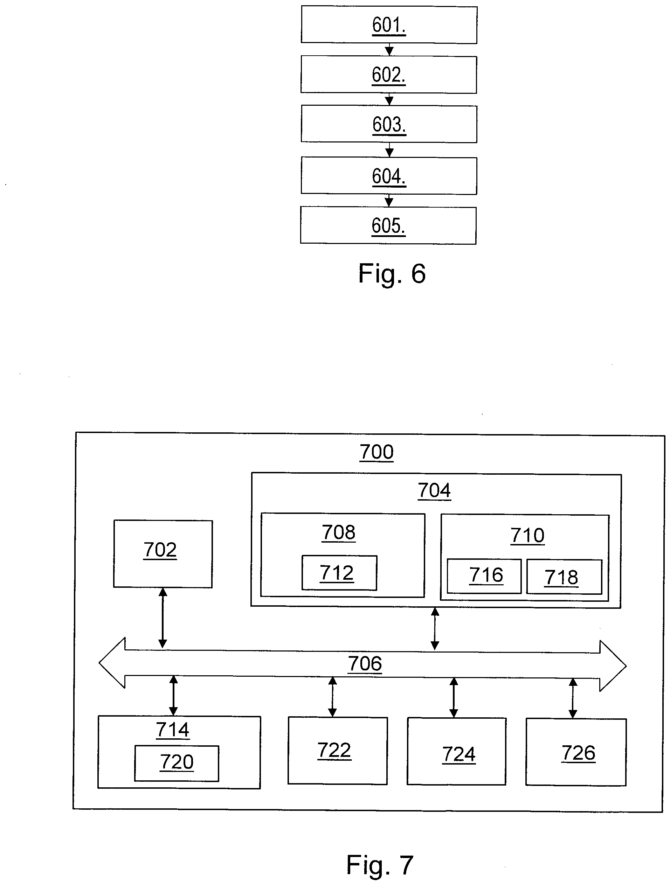

**FIG. 6** illustrates a flow chart of an exemplary method for handling the work site 100 where the plurality of vehicles 1 operate, according to an example. Each of the plurality of vehicles 1 is an autonomous vehicle.

The below method actions may be combined with any examples herein in any suitable manner.

### Action 601

The method comprises, by the processing circuitry 702 of the computer system 700, obtaining work site information indicative of a current state of the work site 100. The current state of the work site 100 comprises respective positions and capabilities of the plurality of vehicles 1. The capabilities of the plurality of vehicles 1 is at least indicative of one or more operations the plurality of vehicles 1 is capable of performing.

### Action 602

The method comprises, by the processing circuitry 702, receiving a natural language request for one or more tasks to be performed in the work site 100 by at least one vehicle of the plurality of vehicles 1.

### Action 603

The method comprises, interpreting from the natural language request, by using a machine learning model at least partly trained to handle natural language requests, a request to perform the one or more tasks.

### Action 604

The method comprises, based on the interpreted request and the work site information, establishing an action plan for the plurality of vehicles 1 to perform the one or more tasks. The action plan comprises instructions for how the plurality of vehicles 1 shall operate to perform the one or more tasks.

### Action 605

The method comprises, transmitting the action plan to the plurality of vehicles 1.

**FIG. 7** is a schematic diagram of a computer system **700** for implementing examples disclosed herein. The computer system **700** is adapted to execute instructions from a computer-readable medium to perform these and/or any of the functions or processing described herein. The computer system **700** may be connected (e.g., networked) to other machines in a LAN (Local Area Network), LIN (Local Interconnect Network), automotive network communication protocol (e.g., FlexRay), an intranet, an extranet, or the Internet. While only a single device is illustrated, the computer system **700** may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system **700** may comprise at least one computing device or electronic device capable of including firmware, hardware, and/or executing software instructions to implement the functionality described herein. The computer system **700** may include processing circuitry **702** (e.g., processing circuitry including one or more processor devices or control units), a memory **704,** and a system bus **706.** The computer system **700** may include at least one computing device having the processing circuitry **702.** The system bus **706** provides an interface for system components including, but not limited to, the memory **704** and the processing circuitry **702.** The processing circuitry **702** may include any number of hardware components for conducting data or signal processing or for executing computer code stored in memory **704.** The processing circuitry **702** may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry **702** may further include computer executable code that controls operation of the programmable device.

The system bus **706** may be any of several types of bus structures that may further interconnect to a memory bus (with or without a memory controller), a peripheral bus, and/or a local bus using any of a variety of bus architectures. The memory **704** may be one or more devices for storing data and/or computer code for completing or facilitating methods described herein. The memory **704** may include database components, object code components, script components, or other types of information structure for supporting the various activities herein. Any distributed or local memory device may be utilized with the systems and methods of this description. The memory **704** may be communicably connected to the processing circuitry **702** (e.g., via a circuit or any other wired, wireless, or network connection) and may include computer code for executing one or more processes described herein. The memory **704** may include non-volatile memory **708** (e.g., read-only memory (ROM), erasable programmable read-only memory (EPROM), electrically erasable programmable read-only memory (EEPROM), etc.), and volatile memory **710** (e.g., random-access memory (RAM)), or any other medium which can be used to carry or store desired program code in the form of machine-executable instructions or data structures and which can be accessed by a computer or other machine with processing circuitry **702.** A basic input/output system (BIOS) **712** may be stored in the non-volatile memory **708** and can include the basic routines that help to transfer information between elements within the computer system **700.**

The computer system **700** may further include or be coupled to a non-transitory computer-readable storage medium such as the storage device **714,** which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device **714** and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device **714** and/or in the volatile memory **710,** which may include an operating system **716** and/or one or more program modules **718.** All or a portion of the examples disclosed herein may be implemented as a computer program **720** stored on a transitory or non-transitory computer-usable or computer-readable storage medium (e.g., single medium or multiple media), such as the storage device **714,** which includes complex programming instructions (e.g., complex computer-readable program code) to cause the processing circuitry **702** to carry out actions described herein. Thus, the computer-readable program code of the computer program **720** can comprise software instructions for implementing the functionality of the examples described herein when executed by the processing circuitry **702.** In some examples, the storage device **714** may be a computer program product (e.g., readable storage medium) storing the computer program **720** thereon, where at least a portion of a computer program **720** may be loadable (e.g., into a processor) for implementing the functionality of the examples described herein when executed by the processing circuitry **702.** The processing circuitry **702** may serve as a controller or control system for the computer system **700** that is to implement the functionality described herein.

The computer system **700** may include an input device interface **722** configured to receive input and selections to be communicated to the computer system **700** when executing instructions, such as from a keyboard, mouse, touch-sensitive surface, etc. Such input devices may be connected to the processing circuitry **702** through the input device
interface **722** coupled to the system bus **706** but can be connected through other interfaces, such as a parallel port, an Institute of Electrical and Electronic Engineers (IEEE) 1394 serial port, a Universal Serial Bus (USB) port, an IR interface, and the like. The computer system **700** may include an output device interface **724** configured to forward output, such as to a display, a video display unit (e.g., a liquid crystal display (LCD) or a cathode ray tube (CRT)). The computer system **700** may include a communications interface **726** suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

Below follows a list of **Examples 1-20.** The below Examples 1-20 may be combined with any of the examples above, or with the subject matter of the attached claims in any suitable manner.
Example 1. A computer system (700) comprising a processing circuitry (702) configured to handle a work site (100) where a plurality of vehicles (1) operate,
   each of the plurality of vehicles (1) being an autonomous vehicle, and wherein the processing circuitry (702) is configured to:
   - obtain work site information indicative of a current state of the work site (100), the current state of the work site (100) comprising respective positions and capabilities of the plurality of vehicles (1), the capabilities of the plurality of vehicles (1) at least being indicative of one or more operations the plurality of vehicles (1) is capable of performing,
   - receive a natural language request for one or more tasks to be performed in the work site (100) by at least one vehicle of the plurality of vehicles (1),
   - interpret from the natural language request, by using a machine learning model at least partly trained to handle natural language requests, a request to perform the one or more tasks,
   - based on the interpreted request and the work site information, establish an action plan for the plurality of vehicles (1) to perform the one or more tasks, the action plan comprising instructions for how the plurality of vehicles (1) shall operate to perform the one or more tasks, and
   - transmit the action plan to the plurality of vehicles (1).
Example 2. The computer system (700) of Example 1, wherein the work site information comprises data as obtained from the plurality of vehicles (1) and/or by one or more sensors arranged in the work site (100).
Example 3. The computer system (700) of any of Examples 1 or 2, wherein obtaining the work site information comprises obtaining the work site information periodically or continuously.
Example 4. The computer system (700) of any of Examples 1 - 3, wherein the work site information comprises real-time data and/or wherein obtaining the work site information is subject to a time constraint.
Example 5. The computer system (700) of any of Examples 1-4, wherein the work site information comprises any one or more out of:
   - spatial information of the work site (100),
   - fuelling or charging stations of the work site (100),
   - maintenance facilities of the work site (100),
   - geofences of the work site (100),
   - areas of the work site (100) with restricted access,
   - areas of the work site (100) requiring adapted operations,
   - one or more assigned tasks of the plurality of vehicles (1),
   - one or more positions of actors and/or obstacles in the work site (100),
   - environmental information of the work site (100),
   - capabilities and/or vehicle type of respective vehicles in the plurality of vehicles (1),
   - status of infrastructure within the work site (100),
   - current routes (10) and/or priorities associated with one or more tasks assigned to the plurality of vehicles (1),
   - availability of resources (21) within the work site (100), and
   - traffic information of the work site (100).
Example 6. The computer system (700) of any of Examples 1-5, wherein the processing circuitry (702) is configured to:
   - validate the action plan, and to transmit the action plan in response to the action plan being successfully validated.
Example 7. The computer system (700) of any of Example 6, wherein the processing circuitry (702) is configured to validate the action plan by:
   - transmitting the action plan to a validating entity (40) for validation of the action plan,
   - receiving a response from the validating entity (40) indicating whether the action plan is validated or that an adjustment is required.
Example 8. The computer system (700) of Example 7, wherein the processing circuitry (702) is configured to validate the action plan by:
   - when receiving a response indicating that an adjustment is required to the action plan, determining the adjustment to the action plan, the adjustment being determined based on information supplied in the received response, and/or by using the machine learning model to re-establish the action plan,
   - transmitting the adjustment to the validating entity (40), and
   - receiving a response from the validating entity (40) indicating whether or not the adjustment is approved.
Example 9. The computer system (700) of any of Examples 6-8, wherein the processing circuitry (702) is configured to validate the action plan by:
   - simulating the action plan and assessing by the simulation whether or not the action plan fulfills one or more operational constraints of the work site (100); and
   - wherein validating the action plan comprises at least one of:
      o determining whether the one or more operational constraints of the work site (100) can be fulfilled, and
      o transmitting an adjustment to the action plan, which adjustment is determined to account for at least one of the one or more operational constraints of the work site (100).
Example 10. The computer system (700) of any of Examples 1-9, wherein the processing circuitry (702) is configured to determine one or more operational constraints for the plurality of vehicles (1) to operate in the work site (100), the one or more operational constraints being accounted for when establishing and/or validating the action plan.
Example 11. The computer system (700) of Example 10, wherein the one or more operational constraints relate to any one or more out of:
   - a number of available charging or fuelling station and fuel or energy status of the plurality of vehicles (1),
   - a number of available maintenance facilities and a maintenance need of the plurality of vehicles (1),
   - available equipment for the plurality of vehicles (1) to use and a respective need for the equipment,
   - whether the plurality of vehicles (1) is allowed to operate, or can operate, with respect to wear of roads or drivable surfaces in the work site (100),
   - whether the plurality of vehicles (1) is allowed to operate, or can operate, with respect to a status of infrastructure in the work site (100),
   - whether the plurality of vehicles (1) is allowed to operate, or can operate, with respect to one or more geographical constraints in the work site (100).
Example 12. The computer system (700) of any of Examples 1-11, wherein the natural language request is received as input by a voice command.
Example 13. The computer system (700) of any of Examples 1-12, wherein the machine learning model is, or comprises, a Large Language Model, LLM.
Example 14. A vehicle comprising and/or is controlled by the computer system (700) of any of Examples 1-13.
Example 15. The vehicle of Example 14, wherein the vehicle is an autonomous vehicle.
Example 16. A computer-implemented method for handling a work site (100) where a plurality of vehicles (1) operate, each of the plurality of vehicles (1) being an autonomous vehicle, the method comprising:
   - by a processing circuitry (702) of a computer system (700), obtaining (201, 601) work site information indicative of a current state of the work site (100), the current state of the work site (100) comprising respective positions and capabilities of the plurality of vehicles (1), the capabilities of the plurality of vehicles (1) at least being indicative of one or more operations the plurality of vehicles (1) is capable of performing,
   - by the processing circuitry (702), receiving (202, 602) a natural language request for one or more tasks to be performed in the work site (100) by at least one vehicle of the plurality of vehicles (1),
   - interpreting (203, 603) from the natural language request, by using a machine learning model at least partly trained to handle natural language requests, a request to perform the one or more tasks,
   - based on the interpreted request and the work site information, establishing ( 205, 604) an action plan for the plurality of vehicles (1) to perform the one or more tasks, the action plan comprising instructions for how the plurality of vehicles (1) shall operate to perform the one or more tasks, and
   - transmitting (207, 605) the action plan to the plurality of vehicles (1).
Example 17. The method of Example 16, further comprising:
   - by the processing circuitry (702), determining (204) one or more operational constraints for the plurality of vehicles (1) to operate in the work site (100), the one or more operational constraints being accounted for when establishing and/or validating the action plan.
Example 18. The method of Example 16 or 17, further comprising:
   - by the processing circuitry (702), validating (206) the action plan, and
   - wherein transmitting (207) the action plan is performed in response to the action plan being successfully validated.
Example 19. A computer program product comprising program code for performing, when executed by the processing circuitry (702), the method of any of Examples 16-18.
Example 20. A non-transitory computer-readable storage medium comprising instructions, which when executed by the processing circuitry (702), cause the processing circuitry (702) to perform the method of any of Examples 16-18.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A computer system (700) comprising a processing circuitry (702) configured to handle a work site (100) where a plurality of vehicles (1) operate, each of the plurality of vehicles (1) being an autonomous vehicle, and wherein the processing circuitry (702) is configured to:
- obtain work site information indicative of a current state of the work site (100), the current state of the work site (100) comprising respective positions and capabilities of the plurality of vehicles (1), the capabilities of the plurality of vehicles (1) at least being indicative of one or more operations the plurality of vehicles (1) is capable of performing,
- receive a natural language request for one or more tasks to be performed in the work site (100) by at least one vehicle of the plurality of vehicles (1),
- interpret from the natural language request, by using a machine learning model at least partly trained to handle natural language requests, a request to perform the one or more tasks,
- based on the interpreted request and the work site information, establish an action plan for the plurality of vehicles (1) to perform the one or more tasks, the action plan comprising instructions for how the plurality of vehicles (1) shall operate to perform the one or more tasks, and
- transmit the action plan to the plurality of vehicles (1).

2. The computer system (700) of claim 1, wherein the work site information comprises data as obtained from the plurality of vehicles (1) and/or by one or more sensors arranged in the work site (100).

3. The computer system (700) of any of claims 1 - 2, wherein the work site information comprises real-time data and/or wherein obtaining the work site information is subject to a time constraint.

4. The computer system (700) of any of claims 1-3, wherein the processing circuitry (702) is configured to:
- validate the action plan, and to transmit the action plan in response to the action plan being successfully validated.

5. The computer system (700) of any of claim 4, wherein the processing circuitry (702) is configured to validate the action plan by:
- transmitting the action plan to a validating entity (40) for validation of the action plan,
- receiving a response from the validating entity (40) indicating whether the action plan is validated or that an adjustment is required.

6. The computer system (700) of claim 5, wherein the processing circuitry (702) is configured to validate the action plan by:
- when receiving a response indicating that an adjustment is required to the action plan, determining the adjustment to the action plan, the adjustment being determined based on information supplied in the received response, and/or by using the machine learning model to re-establish the action plan,
- transmitting the adjustment to the validating entity (40), and
- receiving a response from the validating entity (40) indicating whether or not the adjustment is approved.

7. The computer system (700) of any of claims 4-6, wherein the processing circuitry (702) is configured to validate the action plan by:
- simulating the action plan and assessing by the simulation whether or not the action plan fulfills one or more operational constraints of the work site (100); and
- wherein validating the action plan comprises at least one of:
o determining whether the one or more operational constraints of the work site (100) can be fulfilled, and
o transmitting an adjustment to the action plan, which adjustment is determined to account for at least one of the one or more operational constraints of the work site (100).

8. The computer system (700) of any of claims 1-7, wherein the processing circuitry (702) is configured to determine one or more operational constraints for the plurality of vehicles (1) to operate in the work site (100), the one or more operational constraints being accounted for when establishing and/or validating the action plan.

9. The computer system (700) of any of claims 1-8, wherein the natural language request is received as input by a voice command and/or wherein the machine learning model is, or comprises, a Large Language Model, LLM.

10. A vehicle comprising and/or being controlled by the computer system (700) of any of claims 1-9.

11. A computer-implemented method for handling a work site (100) where a plurality of vehicles (1) operate, each of the plurality of vehicles (1) being an autonomous vehicle, the method comprising:
- by a processing circuitry (702) of a computer system (700), obtaining (201, 601) work site information indicative of a current state of the work site (100), the current state of the work site (100) comprising respective positions and capabilities of the plurality of vehicles (1), the capabilities of the plurality of vehicles (1) at least being indicative of one or more operations the plurality of vehicles (1) is capable of performing,
- by the processing circuitry (702), receiving (602, 202) a natural language request for one or more tasks to be performed in the work site (100) by at least one vehicle of the plurality of vehicles (1),
- interpreting (603, 203) from the natural language request, by using a machine learning model at least partly trained to handle natural language requests, a request to perform the one or more tasks,
- based on the interpreted request and the work site information, establishing (604, 205) an action plan for the plurality of vehicles (1) to perform the one or more tasks, the action plan comprising instructions for how the plurality of vehicles (1) shall operate to perform the one or more tasks, and
- transmitting (605, 207) the action plan to the plurality of vehicles (1).

12. The method of claim 11, further comprising:
- by the processing circuitry (702), determining (204) one or more operational constraints for the plurality of vehicles (1) to operate in the work site (100), the one or more operational constraints being accounted for when establishing and/or validating the action plan.

13. The method of claim 11 or 12, further comprising:
- by the processing circuitry (702), validating (206) the action plan, and
- wherein transmitting (207) the action plan is performed in response to the action plan being successfully validated.

14. A computer program product comprising program code for performing, when executed by the processing circuitry (702), the method of any of claims 11-13.

15. A non-transitory computer-readable storage medium comprising instructions, which when executed by the processing circuitry (702), cause the processing circuitry (702) to perform the method of any of claims 11-13.
